# EUROPÄISCHE PATENTSCHRIFT

(11) **EP 2 665 910 B1**
(45) Veröffentlichungstag und Bekanntmachung des Hinweises auf die Patenterteilung: **30.03.2016**
(21) Anmeldenummer: 12700788.8
(22) Anmeldetag: 19.01.2012
(51) Int. Cl.: F02K 3/02, F02K 1/72

(54) **FLUGGASTURBINENSCHUBUMKEHRVORRICHTUNG**
AVIATION GAS TURBINE THRUST REVERSING DEVICE
DISPOSITIF D'INVERSION DE POUSSÉE DE TURBINE À GAZ D'AVION

(30) Priorität: 19.01.2011 DE 102011008917
(43) Veröffentlichungstag der Anmeldung: 27.11.2013
(73) Patentinhaber: Rolls-Royce Deutschland Ltd & Co KG, 15827 Blankenfelde-Mahlow (DE)
(72) Erfinder: TODOROVIC, Predrag, 10437 Berlin (DE)
(74) Vertreter: Hoefer & Partner Patentanwälte mbB
(86) Internationale Anmeldenummer: PCT/EP2012/000240
(87) Internationale Veröffentlichungsnummer: WO 2012/097995

(56) Entgegenhaltungen:
- DE-A1- 3 711 246
- DE-B- 1 027 521
- US-A- 3 036 431
- US-A- 3 280 562
- US-A- 3 981 451

## Beschreibung

Die Erfindung bezieht sich auf ein Fluggasturbinentriebwert mit Schubumtehrvorrichtung, mit Triebwerksverkleidungen sowie mit mehreren, am Umfangsbereich angeordneten, lageveränderbaren Umlenkelementen.

Aus der EP 1 852 595 A2 ist eine Schubumkehrvorrichtung bekannt, bei welcher in einem Nebenstromkanal, durch welchen Luft von einem Fan geleitet wird, Umlenkelemente oder Strömungsleitelemente vorgesehen sind, welche von einer Vorwärtsschubposition, in welcher die Durchströmung des Nebenstromkanals ungehindert erfolgen kann, in eine Schubumkehrposition bewegbar sind. Hierbei ist es erforderlich, den Nebenstromkanal in der Schubumkehrposition im Wesentlichen vollständig zu schließen, um die gesamte Nebenströmung durch die Umlenkelemente oder Strömungsleitelemente zu führen. Im Hinblick auf die Geometrie des Nebenstromkanals und insbesondere die Geometrie der Verkleidung des Kerntriebwerks ist bei einer im Wesentlichen axialen Verschiebung der Schubumkehrvorrichtung entweder eine Anpassung der Geometrie des Nebenstromkanals oder kein vollständiges Verschließen des Nebenstromkanals gegeben. Bei einer Anpassung der Geometrie des Nebenstromkanals, insbesondere der Verkleidung des Kerntriebwerks, ergeben sich in der Vorwärtsschubposition Nachteile. Bei einem nicht vollständigen Verschließen des Nebenstromkanals in der Schubumkehrposition kann die Schubumkehrvorrichtung nicht optimal wirken. Somit ist die aus dem Stand der Technik bekannte Lösung nicht für alle Anwendungen und alle Triebwerkskonstruktionen optimal einsetzbar.

Die US 2009/0301056 A1 zeigt eine Konstruktion, bei welcher die Umlenkelemente oder Strömungsleitelemente geradlinig in einem Winkel zur Axialachse des Triebwerks verschoben werden. Auch hierbei ist es erforderlich, die Geometrie der Verkleidung des Kerntriebwerks so zu modifizieren, dass eine vollständige Strömungsumleitung erfolgen kann. Hierdurch ergeben sich Nachteile hinsichtlich der Leistung im Vorwärtsschubbetrieb.

Aus dem Stand der Technik ist bekannt, dass Schubumkehrvorrichtungen einen Hebelmechanismus innerhalb des Nebenstromkanals aufweisen. Dieser Hebelmechanismus verschwenkt sich bei Übergang in die Schubumkehrposition, um Umlenkelemente in den Strömungsweg einzubringen. Als nachteilig erweist es sich dabei, dass der Hebelmechanismus sowie seine zugeordneten Lagerungen die Strömung durch den Nebenstromkanal stört und den Wirkungsgrad der Fluggasturbine minimiert. Weiterhin ergeben sich durch die erschwerte Zugangsmöglichkeit zu dem Kerntriebwerk weitere Nachteile, insbesondere bei der Wartung. Im Hinblick auf den komplexen Aufbau des Hebelmechanismus sowie der gesamten Schubumkehrvorrichtung ergibt sich ein hoher fertigungstechnischer Aufwand, der in hohen Kosten resultiert.

Die US 3,036,431 A zeigt eine Fluggasturbine mit einer Schubumkehrvorrichtung am Ausströmende. Die Schubumkehrvorrichtung umfasst einen ringförmigen Bereich einer äußeren Triebwerksverkleidung, welcher in Axialrichtung verschiebbar ist. Bei einer Verschiebung in die Schubumkehrposition ergibt sich ein ringförmiger Freiraum, durch welchen die Strömung durch den Nebenstromkanal austreten kann. Um die Strömung durch den Nebenstromkanal durch diesen ringförmigen Freiraum zu leiten, sind Klappen vorgesehen, welche an dem verschiebbaren Teil der Triebwerksverkleidung gelagert sind und den Nebenstromkanal in der Schubumkehrposition verschließen.

Die US 3,280,562 A zeigt eine ähnliche Lösung. Auch hierbei ist vorgesehen, an dem axial verschiebbaren Bereich der Triebwerksverkleidung Klappen zu lagern, welche in der Schubumkehrposition, in welcher die radial äußere Triebwerksverkleidung in axialer Richtung verschoben wurde, den Nebenstromkanal verschließen. Auch hierbei ist der ringförmige Freiraum vollständig geöffnet.

Die DE 37 11 246 A1 zeigt ebenfalls eine Konstruktion, bei welcher ein ringförmiges Verkleidungsteil axial verschiebbar ist. Hierdurch werden Schubumkehrschaufelkaskaden, welche mit dem Verkleidungsteil gekoppelt sind, in axialer Richtung bewegt. Die Blockierung des Nebenstromkanals erfolgt jedoch mittels separater Blockierungsklappen, welche bei der axialen Verschiebung des Verkleidungsteils zusätzlich verschwenkt werden.

Die US 3,981,451 A zeigt ebenfalls ein gänzlich anderes technisches Lösungsprinzip. Bei diesem werden zwei Umlenkkaskadenelemente verwendet. Eines der Kaskadenelemente, nämlich das äußere Kaskadenelement, verbleibt stationär, während das innere Kaskadenelement in der Schubumkehrposition in den Nebenstromkanal verschwenkt wird. Auch hierbei ist eine zusätzliche Blockierungstür erforderlich, um den Nebenstromkanal zu verschließen.

Der Erfindung liegt die Aufgabe zugrunde, eine Fluggasturbinenschubumkehrvorrichtung der eingangs genannten Art zu schaffen, welche bei einfachem Aufbau und einfacher, kostengünstiger Herstellbarkeit einen hohen Wirkungsgrad aufweist und für unterschiedliche Geometrien von Fluggasturbinen einsetzbar ist.

Erfindungsgemäß wird die Aufgabe durch die Merkmalskombination des Anspruchs 1 gelöst, die Unteransprüche zeigen weitere vorteilhafte Ausgestaltungen der Erfindung.

Erfindungsgemäß ist somit vorgesehen, dass der hintere Bereich der Triebwerksverkleidung in Axialrichtung des Triebwerks von einer geschlossenen Vorwärtsschubposition in eine nach hinten verschobene Schubumkehrposition verschiebbar ist, in welcher sich ein im Wesentlichen ringförmiger Freiraum zu einem vorderen, feststehenden Bereich der Triebwerksverkleidung ergibt. Der Freiraum ermöglicht es, Umlenkelemente bei der Verschiebung des hinteren Bereichs der Triebwerksverkleidung auf einer zur Mittelachse des Triebwerks weisenden Teilkreisbahn in den Freiraum zu bewegen. Somit wird der hintere Bereich der Triebwerksverkleidung axial verschoben, während gleichzeitig die Umlenkelemente auf einer bogenförmigen Bahn oder teilkreisförmigen Bahn verschoben werden. Erfindungsgemäß wird unter einer bogenförmigen oder teilkreisförmigen Bahn eine gebogene oder abgerundete, auch mit einer komplexen Struktur ausgebildete, in jedem Falle jedoch nicht-gerade Bahn verstanden. Somit gelangen die Umlenkelemente in den Nebenstromkanal und lenken die Strömung in dem Nebenstromkanal zur Schubumkehr um.

Besonders günstig ist es dabei, dass die Umlenkelemente mit ihrem hinteren Endbereich in Anlage an eine Verkleidung des Kerntriebwerks anlegbar sind. Somit. führen die Umlenkelemente zu einer Abdichtung und Blockage des Nebenstromkanals. Die Umlenkelemente führen somit durch ihre (in radialer Richtung gesehene) Höhe zu einer Abdichtung und Blockage des Nebenstromkanals, so dass ein nur relativ kleines zusätzliches Blockageelement erforderlich ist.

Erfindungsgemäß ergibt sich somit die Möglichkeit, durch wenige Bauteile die Schubumkehrfunktion zu gewährleisten. Der hintere Bereich der Triebwerksverkleidung kann einteilig ausgebildet sein und im Wesentlichen eine kreisringförmige Form haben. Diese Kreisringform wird lediglich durch eine Ausnehmung unterbrochen, die zur Montage des Pylons zur Aufhängung des Triebwerks benötigt wird.

Weiterhin ist es vorteilhaft, dass die Umlenkelemente auf einer kreisbogenförmigen oder teilkreisförmigen Bahn bewegt werden. Dabei ist es insbesondere vorteilhaft, wenn die Umlenkelemente mittels Schienenelementen gelagert und geführt sind. Diese Schienenelemente können in dem vorderen Bereich der Triebwerksverkleidung untergebracht sein, ohne dass die Durchströmung des Nebenstromkanals behindert wird. Auch in der Schubumkehrposition befinden sich keine die Durchströmung störenden Bauelemente in dem Nebenstromkanal.

Ein weiterer Vorteil ergibt sich daraus, dass durch eine Verschiebung des hinteren Bereichs der Triebwerksverkleidung dieses mit seiner Anströmkante in Anlage an die Umlenkelemente gebracht werden kann, um die Strömung in effektiver Weise zur Schubumkehr umzulenken. Diese Blockage der Strömung durch den Nebenstromkanal kann an einer Stelle erfolgen, an welcher der radiale Durchmesser der Triebwerksverkleidung des Kerntriebwerks sein Maximum erreicht. Dies ermöglicht es, dass die Axialbewegung des verschiebbaren hinteren Bereichs der Triebwerksverkleidung reduziert werden kann. Hierdurch ergibt sich erfindungsgemäß die Möglichkeit, kleinere und leichtere Betätigungs- und Antriebsvorrichtungen zu verwenden.

Zur besseren Abdichtung bzw. Blockage der Strömung durch den Nebenstromkanal ist es besonders günstig, wenn die Anströmkante des hinteren Bereichs der Verkleidung teilkreisförmig bzw. gebogen und nicht gerade ausgebildet ist.

Die Bewegungsbahn sowohl der Umlenkelemente als auch des hinteren Bereichs der Verkleidung ist bevorzugterweise bogenförmig oder in einer ähnlichen komplexen Struktur ausgebildet, um die Kinematik zu optimieren und den vorhandenen Freiraum effektiv zu nutzen.

Erfindungsgemäß ergibt sich somit keine Behinderung der Durchströmung des Nebenstromkanals in der Vorwärtsschubposition, so dass der Wirkungsgrad der Fluggasturbine nicht beeinträchtigt wird. Insbesondere ist es dabei nicht erforderlich, die Geometrie der Wandungen des Nebenstromkanals zu verändern und an eine Schubumkehrvorrichtung anzupassen, so wie dies aus dem Stand der Technik bekannt ist.

Erfindungsgemäß ist bevorzugterweise an dem Umlenkelement eine Vielzahl von Leitelementen ausgebildet, wobei das Umlenkelement insgesamt bevorzugterweise gitterartig ausgestaltet ist. Hierdurch ergibt sich eine in sich stabile Konstruktion, welche strömungsoptimiert ist. Dies wird insbesondere durch eine kaskadenförmige Ausgestaltung des Umlenkelementes erreicht.

Weiterhin ist es besonders günstig, wenn die einzelnen Umlenkelemente in der Vorwärtsschubposition in Umfangsrichtung zueinander beabstandet sind und in der Schubumkehrposition zueinander angenähert angeordnet sind. Somit ist es möglich, eine effektive Anlage der einzelnen Umlenkelemente in der Schubumkehrposition zu realisieren, um den Wirkungsgrad in der Schubumkehrposition zu erhöhen.

Im Folgenden wird die Erfindung anhand eines Ausführungsbeispiels in Verbindung mit der Zeichnung beschrieben. Dabei zeigt:
- Fig. 1: eine schematische Darstellung eines Gasturbinentriebwerks gemäß der vorliegenden Erfindung,
- Fig. 2, 3: perspektivische Ansichten einer erfindungsgemäße Fluggasturbine von schräg vorne in Vorwärtsschubposition bzw. Schubumkehrposition,
- Fig. 4, 5: perspektivische Ansichten von schräg hinten auf die Fluggasturbine gemäß Fig. 2 und 3 in der Vorwärtsschubposition bzw. Schubumkehrposition,
- Fig. 6: eine schematische Teil-Schnittansicht zur Erläuterung der Funktionsweise der erfindungsgemäßen Schubumkehrvorrichtung,
- Fig. 7: eine perspektivische Teilansicht des erfindungsgemäßen Ausführungsbeispiels in Schubumkehrposition,
- Fig. 8: eine perspektivische Ansicht, analog Fig. 7, in Vorwärtsschubposition, und
- Fig. 9, 10: perspektivische Ansichten des erfindungsgemäßen Umlenkelements.

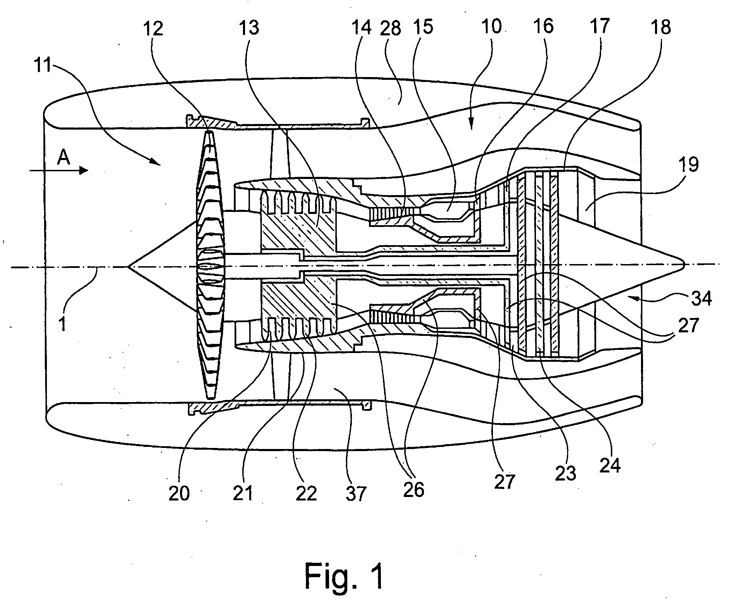

Das Gasturbinentriebwerk 10 gemäß Fig. 1 ist ein Beispiel einer Turbomaschine, bei der die Erfindung Anwendung finden kann. Aus dem Folgenden wird jedoch klar, dass die Erfindung auch bei anderen Turbomaschinen verwendet werden kann. Das Triebwerk 10 ist in herkömmlicher Weise ausgebildet und umfasst in Strömungsrichtung hintereinander einen Lufteinlass 11, einen in einem Gehäuse umlaufenden Fan 12, einen Zwischendruckkompressor 13, einen Hochdruckkompressor 14, Brennkammern 15, eine Hochdruckturbine 16, eine Zwischendruckturbine 17 und eine Niederdruckturbine 18 sowie eine Abgasdüse 19, die sämtlich um eine zentrale Triebwerksachse 1 angeordnet sind.

Der Zwischendruckkompressor 13 und der Hochdruckkompressor 14 umfassen jeweils mehrere Stufen, von denen jede eine in Umfangsrichtung verlaufende Anordnung fester stationärer Leitschaufeln 20 aufweist, die allgemein als Statorschaufeln bezeichnet werden und die radial nach innen vom Triebwerksgehäuse 21 in einem ringförmigen Strömungskanal durch die Kompressoren 13, 14 vorstehen. Die Kompressoren weisen weiter eine Anordnung von Kompressorlaufschaufeln 22 auf, die radial nach außen von einer drehbaren Trommel oder Scheibe 26 vorstehen, die mit Naben 27 der Hochdruckturbine 16 bzw. der Zwischendruckturbine 17 gekoppelt sind.

Die Turbinenabschnitte 16, 17, 18 weisen ähnliche Stufen auf, umfassend eine Anordnung von festen Leitschaufeln 23, die radial nach innen vom Gehäuse 21 in den ringförmigen Strömungskanal durch die Turbinen 16, 17, 18 vorstehen, und eine nachfolgende Anordnung von Turbinenschaufeln 24, die nach außen von einer drehbaren Nabe 27 vorstehen. Die Kompressortrommel oder Kompressorscheibe 26 und die darauf angeordneten Schaufeln 22 sowie die Turbinenrotornabe 27 und die darauf angeordneten Turbinenlaufschaufeln 24 drehen sich im Betrieb um die Triebwerksachse 1.

Weiterhin zeigt die Fig. 1 eine Verkleidung 28 eines Nebenstromkanals 37 sowie mit dem Bezugszeichen 34 den bereits erläuterten Aufbau des Kerntriebwerks.

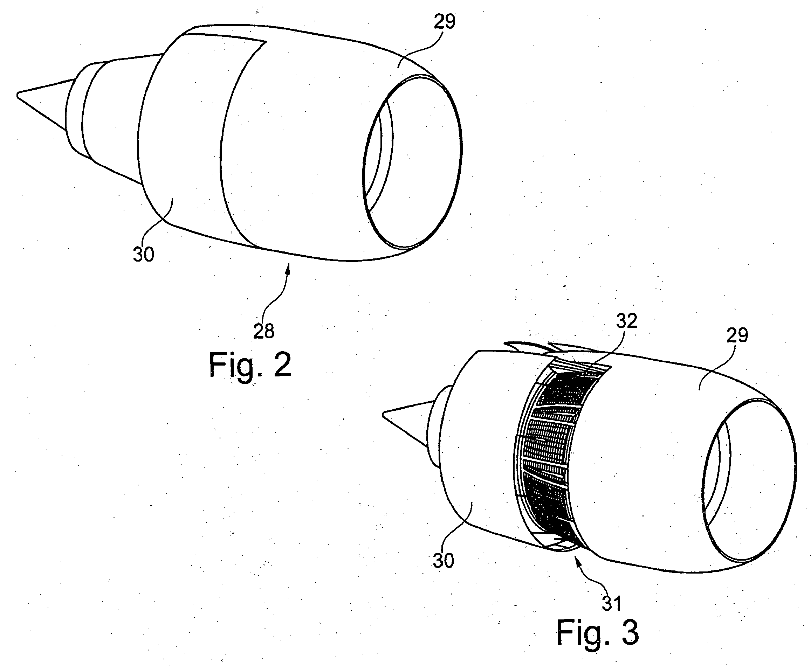

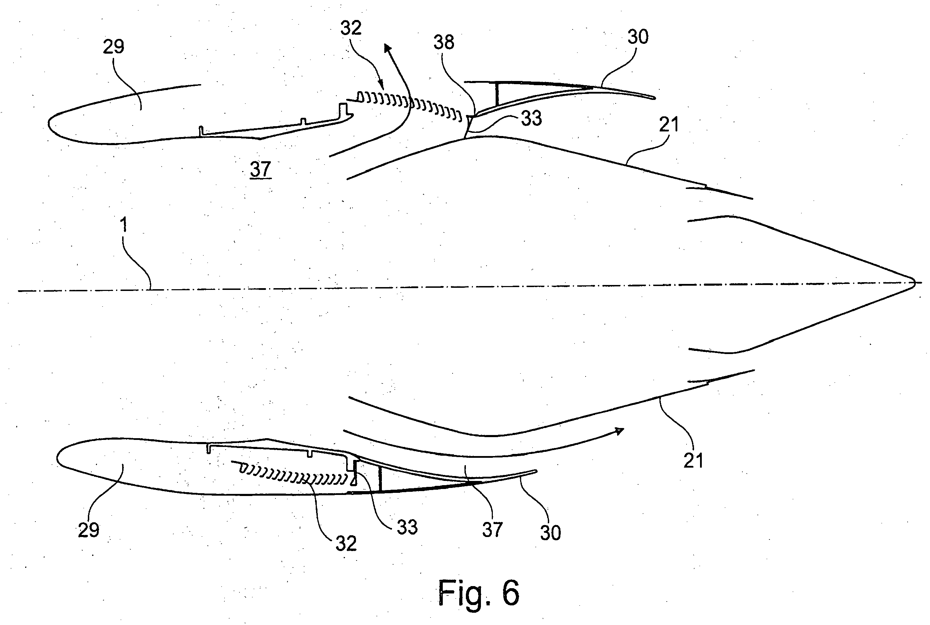

Die Fig. 2 bis 5 zeigen jeweils perspektivische Darstellungen der erfindungsgemäßen Fluggasturbine mit Schubumkehrvorrichtung. Die Fig. 2 zeigt eine Vorwärtsschubposition in Ansicht von schräg vorne, in welcher die Verkleidung 28 geschlossen ist, um eine ungestörte Durchströmung des Nebenstromkanals zu ermöglichen. Dieser Zustand ist auch in der unteren Hälfte der Fig. 6 schematisch dargestellt. Es ist dabei insbesondere zu erkennen, dass ein vorderer, stationär bleibender Bereich 29 der Verkleidung 28 den ersten Teil der Begrenzung des Nebenstromkanals 37 bildet, während ein hinterer Bereich 30 der Verkleidung 28 in Axialrichtung verschiebbar ist. Dies ergibt sich aus einem Vergleich der oberen Bildhälfte und der unteren Bildhälfte gemäß Fig. 6. Die Fig. 2 zeigt somit die Vorwärtsschubposition, während die Fig. 3 die Schubumkehrposition darstellt, in welcher der hintere Bereich 30 der Verkleidung 28 axial verschoben ist. Hierdurch ergibt sich ein ringförmiger Freiraum 31, der lediglich durch den im Einzelnen nicht dargestellten Bereich eines Pylonen zur Aufhängung der Fluggasturbine unterbrochen wird.

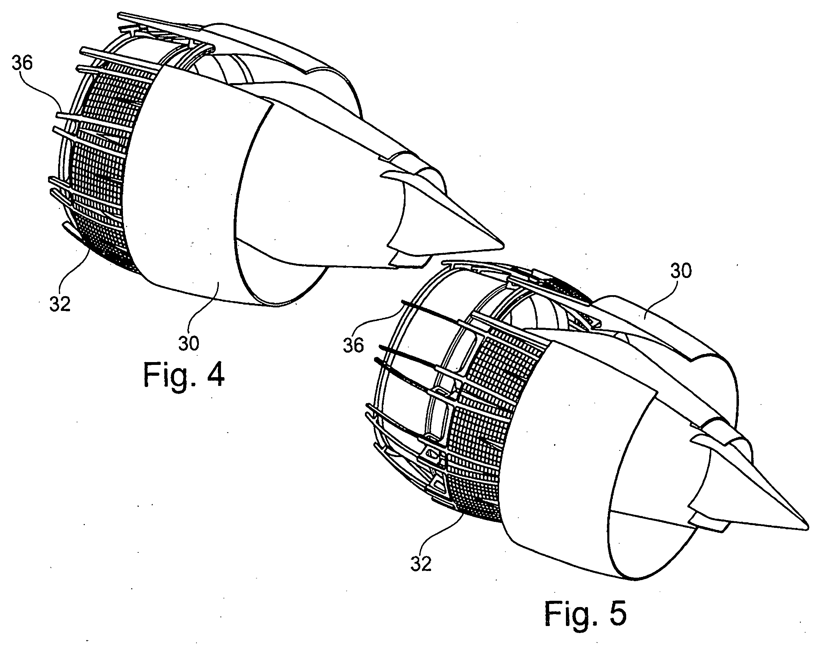

Die Fig. 4 und 5 zeigen in rückwärtiger perspektivischer Schrägansicht die Darstellung der Fig. 2 und 3, wobei auf die Darstellung des vorderen Bereichs 29 der Verkleidung 28 verzichtet wurde, um die Umlenkelemente 32 besser sichtbar zu machen. In Fig. 4 (Vorwärtsschubposition) ist ersichtlich, dass die Umlenkelemente 32 innerhalb der Verkleidung des Nebenstromkanals 37 so angeordnet sind, dass eine Durchströmung des Nebenstromkanals 37 nicht behindert wird (untere Bildhälfte der Fig. 6). Bei einer Axialverschiebung des hinteren Bereichs 30 der Verkleidung 28 (siehe Fig. 5) in die Schubumkehrposition werden die einzelnen Umlenkelemente 32 auf einer kreisbogenförmigen Bahn nach hinten und nach innen bewegt. Aus einem Vergleich der Fig. 4 und 5 ergibt sich, dass die Umlenkelemente 32 in der Vorwärtsschubposition zueinander einen Abstand aufweisen. In der Schubumkehrposition (Fig. 5) werden die Umlenkelemente 32 in Umfangsrichtung aneinander angenähert, so dass sich der durch den Abstand (Fig. 4) gebildete Spalt schließt und die Umkehrelemente 32 an ihrer Hinterkante aneinanderliegen, so wie dies auch in Fig. 3 dargestellt ist.

In der Beschreibung beziehen sich die Begriffe "vorne" und "hinten" auf die Durchströmungsrichtung der Fluggasturbine, "vorne" entspricht dem Einströmbereich, "hinten" entspricht dem Auslassbereich.

Die Fig. 6 zeigt, dass die Umlenkelemente 32 an ihrem hinteren Endbereich ein radial nach innen weisendes Blockageelement 33 umfassen, welches in der Schubumkehrposition (obere Bildhälfte von Fig. 6) gegen die Verkleidung 21 des Kerntriebwerks 34 anliegt. Der hintere Bereich 30 der Verkleidung 28 weist an seinem vorderen Ende eine Anströmkante 38 auf, welche in der Schubumkehrposition (obere Bildhälfte von Fig. 6) gegen den hinteren Endbereich der Umlenkelemente 32 anliegt und zu einem vollständigen Verschluss in axialer hinterer Richtung des Nebenstromkanals 37 führt.

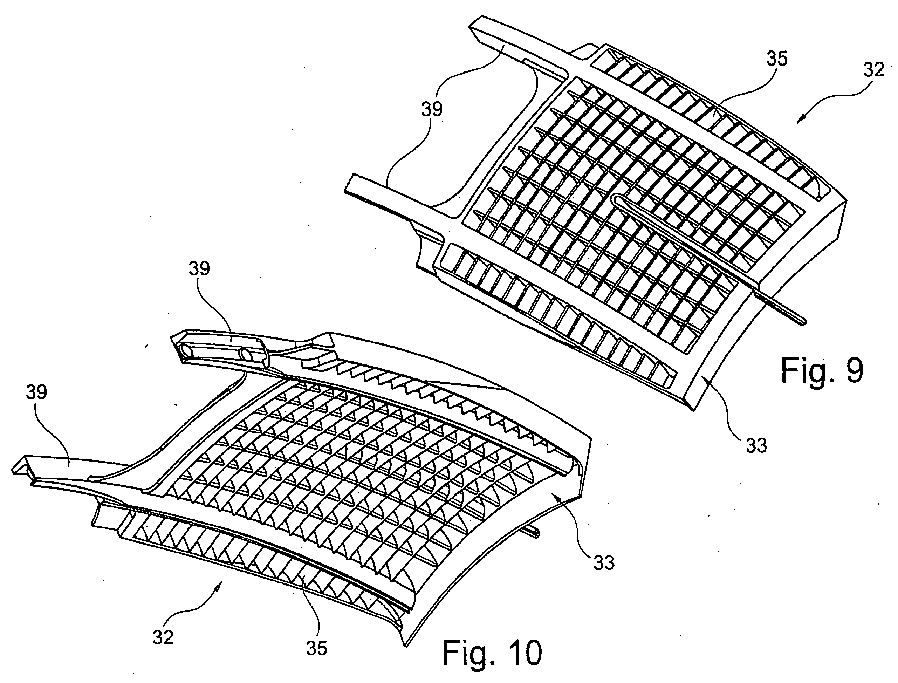

Wie die Fig. 9 und 10 zeigen, sind die Umlenkelemente 32 gitterartig oder kaskadenartig ausgebildet und umfassen eine Vielzahl von strömungsoptimiert ausgebildeten Leitelementen 35.

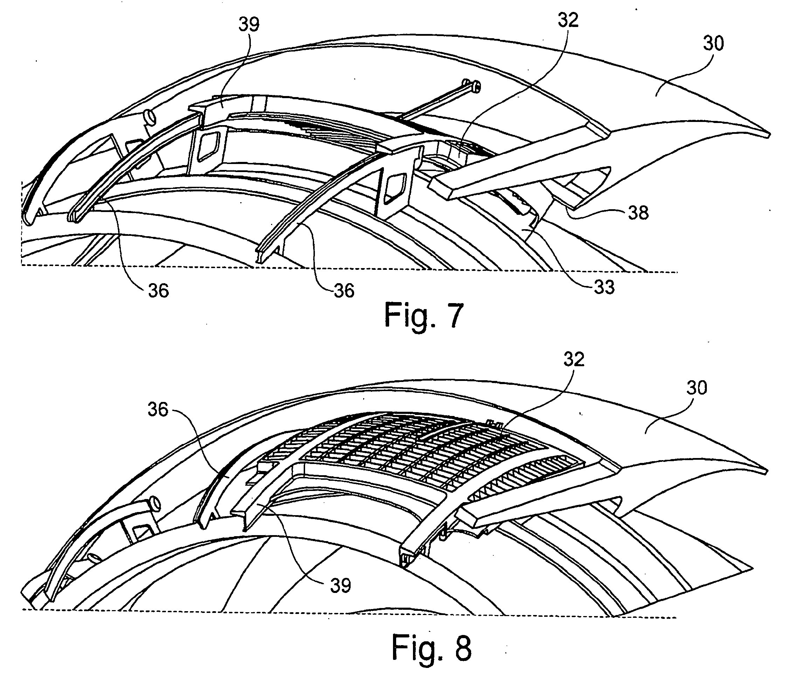

Die Fig. 7 bis 10 zeigen weiterhin Schienenelemente 36, welche als Teleskopschienen ausgebildet sind und an denen die Umlenkelemente 32 gelagert sind. Die Schienenelemente 36 sind teilkreisbogenartig ausgebildet und passend zu Schienenelementen 39 der Umlenkelemente 32 gestaltet, so dass die Umlenkelemente 32 in einfacher Weise stabil und präzise gelagert sind.

Die Umlenkelemente 32 können beispielsweise als Gussteile oder als Kompositteile gefertigt sein.

Durch die erfindungsgemäße Ausgestaltung ergeben sich in der Schubumkehrposition Zugkräfte, die auf die Umlenkelemente 32 wirken und diese in der Schubumkehrposition fixieren. Weiterhin ergibt sich eine Radialkraftkomponente, die zu einer dichtenden Anlage der Blockageelemente 33 an die Verkleidung 31 beiträgt. Betrachtet man die einzelnen Stege des kaskadenartigen Umlenkelements 32, so ergibt sich hinsichtlich der bei der Durchströmung wirkenden Kräfte, dass auch eine radial nach innen wirkende Kraftkomponente auftritt, welche die oben beschriebene Anpressung der Umlenkelemente 32 in Radialrichtung nach innen und damit die dichtende Anlage der Blockageelemente 33 bewirkt. Verstärkt wird dieser Effekt noch durch die auf die Blockageelemente 33 einwirkende Strömung bei deren Umlenkung, so wie sich dies aus dem oberen Teil der Fig. 6 ergibt.

### Bezugszeichenliste:

- 1: Triebwerksachse / Mittelachse
- 10: Gasturbinentriebwerk
- 11: Lufteinlass
- 12: im Gehäuse umlaufender Fan
- 13: Zwischendruckkompressor
- 14: Hochdruckkompressor
- 15: Brennkammern
- 16: Hochdruckturbine
- 17: Zwischendruckturbine
- 18: Niederdruckturbine
- 19: Abgasdüse
- 20: Leitschaufeln
- 21: Triebwerksgehäuse / Verkleidung
- 22: Kompressorlaufschaufeln
- 23: Leitschaufeln
- 24: Turbinenschaufeln
- 26: Kompressortrommel oder -Scheibe
- 27: Turbinenrotornabe
- 28: Verkleidung (nacelle)
- 29: Vorderer Bereich der Verkleidung
- 30: Hinterer Bereich der Verkleidung
- 31: Ringförmiger Freiraum
- 32: Umlenkelement (Kaskade)
- 33: Blockageelement.
- 34: Kerntriebwerk
- 35: Leitelement
- 36: Schienenelement
- 37: Nebenstromkanal
- 38: Anströmkante
- 39: Schienenelement

## Patentansprüche

1. Fluggasturbinentriebwerk mit Schubumkehrvorrichtung, mit einem Kerntriebwerk (34), mit einer radial äußeren Triebwerksverkleidung (28) und einer radial inneren Treibwerksverkleidung (21), welche einen Nebenstromkanal (37) bilden, deren hinterer Bereich (30) in Axialrichtung des Fluggasturbinentriebwerks (10) von einer geschlossenen Vorwärtsschubposition in eine nach hinten verschobene Schubumkehrposition verschiebbar ist, in welcher sich ein im Wesentlichen ringförmiger Freiraum (31) zu einem vorderen, feststehenden Bereich (29) der Triebwerksverkleidung (28) ergibt, wobei der hintere Bereich (30) der Triebwerksverkleidung (28) mit Umlenkelementen (32) funktionell gekoppelt ist, welche in der Vorwärtsschubposition innerhalb des vorderen Bereichs (29) der Triebwerksverkleidung (28) angeordnet sind, **dadurch gekennzeichnet, dass** die Umlenkelemente (32) bei der Verschiebung des hinteren Bereichs (30) der Triebwerksverkleidung (28) mittels als Teleskopschienen ausgebildeter Schienenelemente (36), welche die Umlenkelemente (32) lagern und welche teilkreisbogenförmig ausgebildet sind, auf einer zur Mittelachse (1) des Fluggasturbinentriebwerks (10) weisenden teilkreisartigen Bahn in den Freiraum (31) bewegbar sind und mit ihrem hinteren Endbereich in Anlage an die radial innere Triebwerksverkleidung (21) des Kerntriebwerks (10) anlegbar sind.

2. Fluggasturbinentriebwerk mit Schubumkervorrichtung nach Anspruch 1, **dadurch gekennzeichnet, dass** das Umlenkelement (32) eine Vielzahl von Leitelementen (35) umfasst.

3. Fluggasturbinentriebwerk mit Schubumkervorrichtung nach Anspruch 1 oder 2, **dadurch gekennzeichnet, dass** das Umlenkelement (32) gitterartig ausgebildet ist.

4. Fluggasturbinentriebwerk mit Schubumkervorrichtung nach einem der Ansprüche 1 bis 3, **dadurch gekennzeichnet, dass** das Umlenkelement (32) kaskadenförmig ausgebildet ist.

5. Fluggasturbinentriebwerk mit Schubumkervorrichtung nach einem der Ansprüche 1 bis 4, **dadurch gekennzeichnet, dass** das Umlenkelement (32) an seinem hinteren Endbereich mit einem Blockageelement (33) versehen ist, welches in der Schubumkehrposition dichtend an die Verkleidung (21) des Kerntriebwerks (34) anlegbar ist.

6. Fluggasturbinentriebwerk mit Schubumkervorrichtung nach einem der Ansprüche 1 bis 5, **dadurch gekennzeichnet, dass** die Umlenkelemente (32) in der Vorwärtsschubposition in Umfangsrichtung zueinander beabstandet sind und in der Schubumkehrposition zueinander angenähert angeordnet sind.

7. Fluggasturbinentriebwerk mit Schubumkervorrichtung nach einem der Ansprüche 1 bis 6, **dadurch gekennzeichnet, dass** die Umlenkelemente (32) in der Schubumkehrposition mit einem Winkel zur Triebwerksachse (1) angeordnet sind.

## Claims

1. Aircraft gas-turbine engine with thrust-reversing device, including a core engine (34) with a radially outer engine cowling (28) and a radially inner engine cowling (21), said cowlings forming a bypass duct (37), the rear area (30) of which can be displaced in the axial direction of the aircraft gas-turbine engine (10) from a closed forward thrust position into a rearwardly displaced thrust reversal position, resulting in an essentially annular free space (31) towards a forward stationary area (29) of the engine cowling (28), with the rear area (30) of the engine cowling (28) being functionally coupled to deflecting elements (32) arranged in the forward thrust position within the front area (29) of the engine cowling (28), **characterized in that** the deflecting elements (32) during displacement of the rear area (30) of the engine cowling (28) are moveable, by means of rail elements (36) designed as telescopic rails which mount the deflecting elements (32) and have the shape of a partial-circular arch, on a partial-circular path facing the center axis (1) of the aircraft gas-turbine engine (10) into the free space (31) and are contactable by their rear end areas with the radially inner engine cowling (21) of the core engine (34).

2. Aircraft gas-turbine engine with thrust-reversing device in accordance with Claim 1, **characterized in that** the deflecting element (32) includes a plurality of guiding elements (35).

3. Aircraft gas-turbine engine with thrust-reversing device in accordance with Claim 1 or 2, **characterized in that** the deflecting element (32) is designed grid-like.

4. Aircraft gas-turbine engine with thrust-reversing device in accordance with one of the Claims 1 to 3, **characterized in that** the deflecting element (32) is designed cascade-like.

5. Aircraft gas-turbine engine with thrust-reversing device in accordance with one of the Claims 1 to 4, **characterized in that** the deflecting element (32) is provided at its rear end area with a blocking element (33) which in the thrust reversal position can be brought in sealing contact with the cowling (21) of the core engine (34).

6. Aircraft gas-turbine engine with thrust-reversing device in accordance with one of the Claims 1 to 5, **characterized in that** the deflecting elements (32) in the forward thrust position are at a distance from one another in the circumferential direction and are arranged in proximity to one another in the thrust reversal position.

7. Aircraft gas-turbine engine with thrust-reversing device in accordance with one of the Claims 1 to 6, **characterized in that** the deflecting elements (32) in the thrust reversal position are arranged at an angle to the engine axis (1).

## Revendications

1. Moteur d'avion à turbine à gaz avec inverseur de poussée, comprenant un coeur de moteur (34), avec un carénage de moteur extérieur radial (28) et un carénage de moteur intérieur radial (21), lesquels forment un canal de flux secondaire (37) dont la partie postérieure (30) peut être déplacée dans le sens axial du moteur d'avion à turbine à gaz (10) d'une position fermée de poussée vers l'avant à une position d'inversion de poussée décalée vers l'arrière, position dans laquelle un espace libre (31) pour l'essentiel annulaire se forme par rapport à une partie antérieure fixe (29) du carénage de moteur (28), sachant que la partie postérieure (30) du carénage de moteur (28) est couplée de manière fonctionnelle à des éléments déflecteurs (32) qui, dans la position de poussée vers l'avant, sont disposés à l'intérieur de la partie antérieure (29) du carénage de moteur (28), **caractérisé en ce que** lors du déplacement de la partie postérieure (30) du carénage de moteur (28), les éléments déflecteurs (32) peuvent être déplacés dans l'espace libre (31) sur une piste en forme de cercle partiel orientée vers l'axe médian (1) du moteur d'avion à turbine à gaz (10), et ce au moyen d'éléments de rails (36) conçus en tant que rails télescopiques qui logent les éléments déflecteurs (32) et ont une forme d'arc de cercle partiel, et que lesdits éléments déflecteurs (32) peuvent être mis en appui avec leur extrémité postérieure sur le carénage de moteur intérieur radial (21) du coeur de moteur (34).

2. Moteur d'avion à turbine à gaz avec inverseur de poussée selon la revendication n° 1, **caractérisé en ce que** l'élément déflecteur (32) comprend une pluralité d'éléments de guidage (35).

3. Moteur d'avion à turbine à gaz avec inverseur de poussée selon la revendication n° 1 ou n° 2, **caractérisé en ce que** l'élément déflecteur (32) est conçu en forme de grille.

4. Moteur d'avion à turbine à gaz avec inverseur de poussée selon une des revendications n° 1 à n° 3, **caractérisé en ce que** l'élément déflecteur (32) est conçu en forme de cascade.

5. Moteur d'avion à turbine à gaz avec inverseur de poussée selon une des revendications n° 1 à n° 4, **caractérisé en ce qu'**à son extrémité postérieure, l'élément déflecteur (32) est muni d'un élément de blocage (33) qui, dans la position d'inversion de poussée, peut s'appuyer en assurant l'étanchéité sur le carénage (21) du coeur de moteur (34).

6. Moteur d'avion à turbine à gaz avec inverseur de poussée selon une des revendications n° 1 à n° 5, **caractérisé en ce que** dans la position de poussée vers l'avant, les éléments déflecteurs (32) sont distants les uns des autres dans le sens circonférentiel et sont rapprochés les uns des autres dans la position d'inversion de poussée.

7. Moteur d'avion à turbine à gaz avec inverseur de poussée selon une des revendications n° 1 à n° 6, **caractérisé en ce que** dans la position d'inversion de poussée, les éléments déflecteurs (32) sont disposés selon un angle par rapport à l'axe du moteur (1).
